# EUROPEAN PATENT APPLICATION

(11) **EP 4 826 357 A1**
(43) Date of publication of application: **21.10.2026**
(21) Application number: 24903365.5
(22) Date of filing: 30.10.2024
(51) Int. Cl.: G01N 15/149, G01N 15/14, G01N 15/1429

(54) **BIOLOGICAL PARTICLE ISOLATING DEVICE AND BIOLOGICAL PARTICLE ISOLATING METHOD**

(30) Priority: 12.12.2023 JP 2023209067
(71) Applicant: Sony Group Corporation, Tokyo 108-0075 (JP)
(72) Inventor: NAKASHIMA, Yusaku, Tokyo 108-0075 (JP)
(74) Representative: D Young & Co LLP
(86) International application number: PCT/JP2024/038638
(87) International publication number: WO 2025/126703

(57) **Abstract**

An object of the present disclosure is to satisfy the needs described above. For example, an object of the present disclosure is to provide a technology that makes it possible to simultaneously obtain two particular types of sort products from one sample.

The present disclosure provides a bio-particle sorting apparatus including a determining section that executes sort determination on particles included in a bio-sample, such that sort-target particles and non-sort-target sort-allowed particles are sorted into a first containing space; and a display section that displays information about purity of the sort-target particles included in the first containing space. In addition, the present disclosure also provides a bio-particle sort method including executing sort determination on particles included in a bio-sample, such that sort-target particles and non-sort-target sort-allowed particles are sorted into a first containing space; and displaying information about purity of the sort-target particles included in the first containing space.

## Description

### Technical Field

The present disclosure relates to a bio-particle sorting apparatus and a bio-particle sort method. More specifically, the present disclosure relates to a bio-particle sorting apparatus configured to execute sort determination on sort-target particles and non-sort-target sort-allowed particles and to a bio-particle sort method including executing the sort determination.

### Background Art

For example, a particle population such as cells, microorganisms, and liposomes is labeled with a fluorescent dye, and the characteristics of particles are measured by emitting laser light onto each particle in the particle population and measuring the intensity and/or pattern of fluorescence generated from the excited fluorescent dye. Examples of biological sample analyzers that perform the measurement include flow cytometers. In addition, examples of biological sample analyzers configured to sort cells include cell sorters.

Flow cytometers and cell sorters can be configured to emit laser light (excitation light) with a particular wavelength onto particles flowing in single file within a flow channel and detect fluorescence and/or scattered light generated from each particle to thereby analyze a plurality of the particles individually. These apparatuses are capable of determining characteristics, such as, for example, types, sizes, and structures, of individual particles by converting light detected by a photodetector into electrical signals to digitize the light and performing statistical analysis.

Several proposals have been made to date about techniques of sort processes performed in such biological sample analyzers. For example, the following Patent Literature 1 discloses a microparticle sorting apparatus including a determining section that executes sort determination on particles, in which, in accordance with a particle population to which sort-determination-target particles belong and particle populations to which non-sort-determination-target particles within a predetermined range around the sort-determination-target particles belong, the determining section performs the determination using rule data in which the relationship between the sort-determination-target particles and the non-sort-determination-target particles is defined, particle populations to which the sort-determination-target particles and the non-sort-determination-target particles within the predetermined range can belong include a particle population (a) of sort-target particles, a particle population (b) of particles which are not sort targets but can be ignored in the determination, and a particle population (c) of particles which are neither the sort-target particles nor the ignorable particles, and the ignorable particles include red blood cells (claim 1). It is described in the literature that, by including the determining section that executes the sort determination using the rule data, the microparticle sorting apparatus can execute the sort determination with an increased recovery rate of the sort-target particles while reducing the effect on the purity of the sort-target particles (paragraph 0018).

### Citation List

### Patent Literature

Patent Literature 1: JP-2022-17705-A

### Disclosure of Invention

### Technical Problem

In a sort process performed by a bio-particle sorting apparatus such as a cell sorter, it is required to sort sort-target cells as high a purity as possible, in some cases. In addition, when the number of the sort-target cells is small, in some cases, it is required to give priority to sort efficiency such that as many sort-target cells as possible are sorted, even if the purity is somewhat lowered. Depending on the type or characteristics of a sample to be subjected to the sorting by the apparatus, it is particularly desirable to address the latter need, in some cases. In addition, it is required to satisfy both the needs simultaneously, in some cases.

Examples of cases in which priority is given to sort efficiency as described above include a case in which many particles which are allowed to be sorted but are not sort targets (also referred to as "non-sort-target sort-allowed particles" in the present specification) are present in the sample. In addition, with respect to the sample, it is considered to be particularly useful if both of the needs can be satisfied simultaneously.

In view of this, an object of the present disclosure is to satisfy at least one of the needs described above. For example, an object of the present disclosure is to provide a particle sort technique particularly suited for a bio-sample including many non-sort-target sort-allowed particles.

### Solution to Problem

The present disclosure provides a bio-particle sorting apparatus including a determining section that executes sort determination on particles included in a bio-sample, such that sort-target particles and non-sort-target sort-allowed particles are sorted into a first containing space; and a display section that displays information about purity of the sort-target particles included in the first containing space.

In addition, the present disclosure also provides a bio-particle sort method including executing sort determination on particles included in a bio-sample, such that sort-target particles and non-sort-target sort-allowed particles are sorted into a first containing space; and displaying information about purity of the sort-target particles included in the first containing space.

### Brief Description of Drawings

[Fig. 1] Fig. 1 is a schematic diagram illustrating a configuration example of a bio-particle sorting apparatus according to the present disclosure.
[Fig. 2] Fig. 2 is a schematic diagram illustrating a configuration example of a bio-particle sorting apparatus according to the present disclosure.
[Fig. 3A] Fig. 3A is an example of a flowchart of a bio-particle sort operation executed by the bio-particle sorting apparatus according to the present disclosure.
[Fig. 3B] Fig. 3B is a schematic diagram for explaining sort products.
[Fig. 4A] Fig. 4A is a schematic diagram illustrating an example of a screen on which a particle sort mode is set.
[Fig. 4B] Fig. 4B is a schematic diagram illustrating an example of a screen on which a particle sort mode is set.
[Fig. 4C] Fig. 4C is a schematic diagram illustrating an example of a screen on which a particle sort mode is set.
[Fig. 4D] Fig. 4D is a schematic diagram illustrating an example of a screen on which a particle sort mode is set.
[Fig. 4E] Fig. 4E is a schematic diagram illustrating an example of a screen on which a particle sort mode is set.
[Fig. 4F] Fig. 4F is a schematic diagram illustrating an example of a screen on which a particle sort mode is set.
[Fig. 4G] Fig. 4G is a schematic diagram illustrating an example of a screen on which a particle sort mode is set.
[Fig. 4H] Fig. 4H is a schematic diagram illustrating an example of a screen on which a particle sort mode is set.
[Fig. 5A] Fig. 5A is a schematic diagram illustrating an example of a screen representing the situation of a particle sort operation.
[Fig. 5B] Fig. 5B is a schematic diagram illustrating an example of a screen representing the situation of a particle sort operation.
[Fig. 5C] Fig. 5C illustrates an example of a screen used to prompt to select a particle sort mode.

### Mode(s) for Carrying Out the Invention

Hereinbelow, desirable modes for carrying out the present disclosure are explained. Note that embodiments explained below are representative embodiments of the present disclosure, and the scope of the present disclosure is not limited only to the embodiments. Note that the explanation of the present disclosure is provided in the following order.
1. First Embodiment (Bio-Particle Sorting Apparatus)
   (1) Basic Concept
   (2) Configuration Example
   (3) Example of Sort Operation
   (4) Example of Particle Count
   (5) Example of Sort Mode Setting Screen
   (6) Example of Screen to Prompt to Switch Sort Mode 2. Second Embodiment (Bio-Particle Sort Method)

### 1. First Embodiment (Bio-Particle Sorting Apparatus)

### (1) Basic Concept

The present disclosure relates to a bio-particle sorting apparatus. In one embodiment of the present disclosure, the bio-particle sorting apparatus may include a determining section that executes sort determination on particles included in a bio-sample such that sort-target particles and non-sort-target sort-allowed particles are sorted into a first containing space, and a display section that displays information about the purity of the sort-target particles included in the first containing space.

For example, the determining section may execute the sort determination in a sort mode in which the particles included in the bio-sample are sorted into two or more containing spaces including the first containing space and a second containing space. The sort mode may be configured to be capable of executing at least one of a sort operation (A) or a sort operation (B).
(A) sort operation in which only sort-target particles are sorted into the second containing space; and
(B) sort operation in which only sort-target particles and non-sort-target sort-allowed particles are sorted into the first containing space.

In addition, for example, the bio-particle sorting apparatus according to the present disclosure may be configured to be capable of executing a particle sort operation in a sort mode in which two or more types of sort products are acquired from one bio-sample.

In the sort mode described above, two types of sort products with mutually different purities of sort-target particles may at least be acquired.

The bio-particle sorting apparatus according to the present disclosure enables a sort operation according to the properties of a sample or the needs of a user. For example, the bio-particle sorting apparatus is suited for executing a particle sort operation on a bio-sample that includes many non-sort-target sort-allowed particles.

In addition, for example, the present disclosure enables a particle sort operation in which two types of sort products with mutually different purities of sort-target particles is obtained from one bio-sample.

In addition, the bio-particle sorting apparatus according to the present disclosure enables presentation, to a user, of useful information about sort products obtained by the sort operation.

For example, examples of cases in which a particle sort operation by the bio-particle sorting apparatus according to the present disclosure is used include a case in which the proportion of sort-target particles to all particles included in a sample is very low.

In this case, for example, if a sort product recovered with priority given to the purity of sort-target particles and a sort product recovered with priority given to sort efficiency, albeit with somewhat lowered purity of the sort product, are obtained, it is considered that this contributes to analysis or development by a user. For example, with respect to the sort product recovered with priority given to purity, an analysis targeting only sort-target cells can be performed using the sort product. In addition, the sort product recovered with priority given to sort efficiency can be subjected to a further sort operation, or it is conceivable also to perform an analysis using the sort product.

In addition, for example, in a case in which a particle sort operation is executed on a bio-sample including non-sort-target particles such as red blood cells, in some cases, sort-target particles are aborted undesirably, and the yield lowers when the non-sort-target particles such as red blood cells are close to the sort-target particles. By applying the particle sort technique according to the present disclosure, the abort can be avoided, and the yield of sort-target particles can be improved.

For example, the information about the purity of the sort-target particles included in the first containing space may include at least one of
the proportion of the number of particles belonging to a particle population (a) to the total number of particles belonging to the particle population (a), a particle population (b), and a particle population (c) in the first containing space;
the proportion of the number of particles belonging to the particle population (a) to the total number of particles belonging to the particle populations (a) and (b) in the first containing space; or
the proportion of the number of particles belonging to the particle population (a) to the total number of particles belonging to the particle populations (a) and (c) in the first containing space.

The bio-particle sorting apparatus (particularly, the display section) may be configured to be capable of displaying one or more of these proportions.

In addition, the display section may display information about the purity of the sort-target particles included in the second containing space.

The information about the purity of the sort-target particles included in the second containing space may include at least one of
the proportion of the number of particles belonging to the particle population (a) to the total number of particles belonging to the particle populations (a) to (c) in the second containing space,
the proportion of the number of particles belonging to the particle population (a) to the total number of particles belonging to the particle populations (a) and (b) in the second containing space, or
the proportion of the number of particles belonging to the particle population (a) to the total number of particles belonging to the particle populations (a) and (c) in the second containing space.

The bio-particle sorting apparatus (particularly, the display section) may be configured to be capable of displaying one or more of these proportions.

These pieces of information are useful for a user who performs a particle sort operation.

In several embodiments, the bio-particle sorting apparatus can be configured to be capable of displaying the proportion of the number of particles belonging to the particle population (a) to the total number of particles belonging to the particle populations (a) and (b) in the containing space. For example, the bio-particle sorting apparatus (particularly, the display section) may be configured to be capable of displaying the proportion of the number of particles belonging to the particle population (a) to the total number of particles belonging to the particle populations (a) and (b) in the first containing space. The bio-particle sorting apparatus can acquire the proportions in association with execution the sort operation described above. The proportions can be presented to a user as information about purity.

As described above, the determining section may execute the sort determination in a sort mode in which the particles included in the bio-sample are sorted into two or more containing spaces including the first containing space and a second containing space and may be configured to be capable of executing, in the sort mode, at least one of a sort operation (A) or a sort operation (B).
(A) sort operation in which only sort-target particles are sorted into the second containing space; and
(B) sort operation in which only sort-target particles and non-sort-target sort-allowed particles are sorted into the first containing space.

In addition, in several embodiments, the bio-particle sorting apparatus may be configured to be capable of executing sort operations (A') and (B') in a particle sort operation in the sort mode.
(A') sort operation in which only sort-target particles are sorted into one containing space, and
(B') sort operation in which only sort-target particles and non-sort-target sort-allowed particles are sorted into an alternative containing space.

A sort product acquired in the second containing space (or the one containing space) by the sort operation (A) (or (A')) and a sort product acquired in the first containing space (or the alternative containing space) by the sort operation (B) (or (B')) may be the two types of sort products with mutually different purities.

The sort product acquired in the second containing space (or the one containing space) and obtained by the sort operation (A) (or (A')) has a high purity of sort-target particles. In addition, the sort product acquired in the first containing space (or the alternative containing space) by the sort operation (B) (or (B')) has a purity lower than that of the sort product acquired by (A) (or (A')), but sort-target particles can be recovered efficiently by the sort operation (B) (or (B')).

For example, being configured to be capable of executing the sort operations (A) and (B) (or the sort operations (A') and (B')) is particularly useful in a case in which the proportion of sort-target particles to all particles included in a sample is low, and the proportion of non-sort-target sort-allowed particles to all the particles is high.

Examples of such a case include a case in which a sort operation is performed on a blood-derived sample in which the content proportion of particular white blood cells which are sort-target particles is low, and many non-sort-target sort-allowed red blood cells are included. In this case, by the sort operation (A) (or (A')), a sort product with a high purity of the particular white blood cells can be obtained, and, by the sort operation (B) (or (B')), a sort product can be obtained in which the purity of the particular white blood cells is lower than that of the sort product obtained by the sort operation (A) (or (A')), but in which the particular white blood cells are recovered with high sort efficiency. The sort product obtained by the sort operation (B) (or (B')) can include red blood cells, but can be used for analysis or development in which the presence of red blood cells is allowed.

In addition, other examples of a case in which the proportion of sort-target particles to all particles included in a sample is low, and the proportion of non-sort-target sort-allowed particles to all the particles is high include a case in which, in addition to sort-target cells, a sample include non-bio-particles (e.g., beads, etc.) used for analysis of the sort-target cells. For example, the non-bio-particles may be non-bio-particles to be used for capturing sort-target cells, or may be non-bio-particles used for analysis of a particular component (analysis of a component that is generated from sort-target cells, etc.). In such a case, by the sort operation (A) (or (A')), a sort product with a high purity of the sort-target cells can be obtained, and, by the sort operation (B) (or (B')), a sort product can be obtained in which the purity of the sort-target cells is lower than that of the sort product obtained by the sort operation (A) (or (A')), but in which the sort-target cells are recovered with high sort efficiency. The sort product obtained by the sort operation (B) (or (B')) can include the non-bio-particles, but, for example, can be used for analysis or development in which the presence of the non-bio-particles is allowed in a case in which the non-bio-particles can be removed easily or in other cases.

Note that, as explained later, the particles may be, for example, bio-particles such as cells or acellular bio-particles, or may be, for example, particles other than bio-particles such as beads. In addition, for example, the beads may be beads in which biological components (e.g., cells, cell-derived components secretions, etc.) are captured on the surfaces of the beads or in the internal cavities of the beads. For example, the beads may be beads that are used for secretion analysis. In addition, the particles may be recovered in a state in which the particles are contained in emulsion particles. In this case, the sort product may be an emulsion, and the dispersed phase forming the emulsion may be emulsion particles containing sort-target particles. For example, the dispersion medium forming the emulsion may be selected as appropriate by those skilled in the art in accordance with the type of the emulsion particles. That is, the bio-particle sorting apparatus according to the present disclosure may be configured as a sorting apparatus for biological-component-capturing particles (particularly, biological-component-capturing beads) or may be configured as a sorting apparatus for emulsion particles. In this manner, the bio-particle sorting apparatus according to the present disclosure may be configured as a sorting apparatus for particles (e.g., beads or emulsion particles) other than bio-particles.

In order to execute the sort operations (A) and (B) (or the sort operations (A') and (B')), for example, a determining section that executes sort determination on particles may be used.

That is, the bio-particle sorting apparatus may include a determining section that executes sort determination on particles, and the determining section may be configured to determine, in a particle sort operation in a sort mode according to the present disclosure, to which of the particle populations (a) to (c) determination-target particles and particles that can be present within a predetermined range around the determination-target particles belong.
(a) particle population of sort-target particles;
(b) particle population of non-sort-target sort-allowed particles; and
(c) particle population of non-sort-target sort-unallowed particles.

By determining to which of (a) to (c) determination-target particles and particles that can be present within a predetermined range around the determination-target particles belong, the sort operations (A) and (B) (or the sort operations (A') and (B')) can be executed.

For example, the bio-particle sorting apparatus
sort the determination-target particles into one containing space when the determination-target particles belong to the particle population (a), and particles belonging to the particle population (b) or (c) are not present within the predetermined range, and
sort the determination-target particles into an alternative containing space when the determination-target particles belong to the particle population (a), and particles belonging to the particle population (b) are present within the predetermined range, but particles belonging to the particle population (c) are not present within the predetermined range.

By the bio-particle sorting apparatus being configured to execute such two patterns of sorting, for example, a first sort product with a high purity of the sort-target particles can be obtained in the one containing space, and a second sort product that has a purity somewhat lower than that of the first sort product, but include the sort-target particles and the sort-allowed particles can be obtained in the alternative containing space. The second sort product includes the sort-allowed particles, and, by acquiring the second sort product, sort-target particles can be recovered efficiently.

### (2) Configuration Example

A configuration example of the bio-particle sorting apparatus configured to be capable of executing a sort operation in a sort mode according to the present disclosure is explained below.

The bio-particle sorting apparatus according to the present disclosure may be configured as a biological sample analyzer described below. That is, a "biological sample analyzer 6100" described below may be interpreted as a "bio-particle sorting apparatus 6100." In addition, the determining section that executes sort determination on particle may be configured as an information processing unit 6103 described below. That is, the "information processing unit 6103" described below may be interpreted as a "determining section 6103."

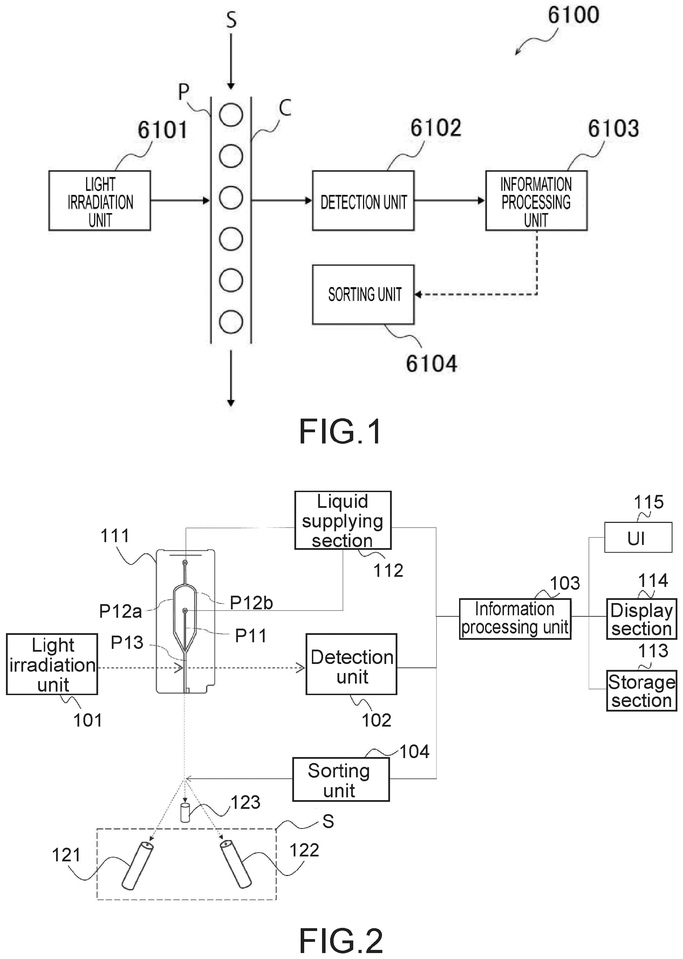

Fig. 1 shows an example configuration of a biological sample analyzer of the present disclosure. A biological sample analyzer 6100 shown in Fig. 1 includes: a light irradiation unit 6101 that irradiates a biological sample S flowing in a flow channel C with light; a detection unit 6102 that detects light generated by irradiating the biological sample S; and an information processing unit 6103 that processes information about the light detected by the detection unit. The biological sample analyzer 6100 is a flow cytometer or an imaging cytometer, for example. The biological sample analyzer 6100 may include a sorting unit 6104 that sorts out specific biological particles P in a biological sample. The biological sample analyzer 6100 including the sorting unit is a cell sorter, for example.

### (Biological Sample)

The biological sample S may be a liquid sample containing biological particles. The biological particles are cells or non-cellular biological particles, for example. The cells may be living cells, and more specific examples thereof include blood cells such as erythrocytes and leukocytes, and germ cells such as sperms and fertilized eggs. Also, the cells may be those directly collected from a sample such as whole blood, or may be cultured cells obtained after culturing. The non-cellular biological particles are extracellular vesicles, or particularly, exosomes and microvesicles, for example. The biological particles may be labeled with one or more labeling substances (such as a dye (particularly, a fluorescent dye) and a fluorochrome-labeled antibody). Note that particles other than biological particles may be analyzed by the biological sample analyzer of the present disclosure, and beads or the like may be analyzed for calibration or the like.

### (Flow Channel)

The flow channel C is designed so that a flow of the biological sample S is formed. In particular, the flow channel C may be designed so that a flow in which the biological particles contained in the biological sample are aligned substantially in one row is formed. The flow channel structure including the flow channel C may be designed so that a laminar flow is formed. In particular, the flow channel structure is designed so that a laminar flow in which the flow of the biological sample (a sample flow) is surrounded by the flow of a sheath liquid is formed. The design of the flow channel structure may be appropriately selected by a person skilled in the art, or a known one may be adopted. The flow channel C may be formed in a flow channel structure such as a microchip (a chip having a flow channel on the order of micrometers) or a flow cell. The width of the flow channel C is 1 mm or smaller, or particularly, may be not smaller than 10 µm and not greater than 1 mm. The flow channel C and the flow channel structure including the flow channel C may be made of a material such as plastic or glass.

The biological sample analyzer of the present disclosure is designed so that the biological sample flowing in the flow channel C, or particularly, the biological particles in the biological sample are irradiated with light from the light irradiation unit 6101. The biological sample analyzer of the present disclosure may be designed so that the irradiation point of light on the biological sample is located in the flow channel structure in which the flow channel C is formed, or may be designed so that the irradiation point is located outside the flow channel structure. An example of the former case may be a configuration in which the light is emitted onto the flow channel C in a microchip or a flow cell. In the latter case, the biological particles after exiting the flow channel structure (particularly, the nozzle portion thereof) may be irradiated with the light, and a flow cytometer of a jet-in-air type can be adopted, for example.

### (Light Irradiation Unit)

The light irradiation unit 6101 includes a light source unit that emits light, and a light guide optical system that guides the light to the irradiation point. The light source unit includes one or more light sources. The type of the light source(s) is a laser light source or an LED, for example. The wavelength of light to be emitted from each light source may be any wavelength of ultraviolet light, visible light, and infrared light. The light guide optical system includes optical components such as beam splitters, mirrors, or optical fibers, for example. The light guide optical system may also include a lens group for condensing light, and includes an objective lens, for example. There may be one or more irradiation points at which the biological sample and light intersect. The light irradiation unit 6101 may be designed to collect light emitted onto one irradiation point from one light source or different light sources.

### (Detection Unit)

The detection unit 6102 includes at least one photodetector that detects light generated by emitting light onto biological particles. The light to be detected may be fluorescence or scattered light (such as one or more of the following: forward scattered light, backscattered light, and side scattered light), for example. Each photodetector includes one or more light receiving elements, and has a light receiving element array, for example. Each photodetector may include one or more photomultiplier tubes (PMTs) and/or photodiodes such as APDs and MPPCs, as the light receiving elements. The photodetector includes a PMT array in which a plurality of PMTs is arranged in a one-dimensional direction, for example. The detection unit 6102 may also include an image sensor such as a CCD or a CMOS. With the image sensor, the detection unit 6102 can acquire an image (such as a bright-field image, a dark-field image, or a fluorescent image, for example) of biological particles.

The detection unit 6102 includes a detection optical system that causes light of a predetermined detection wavelength to reach the corresponding photodetector. The detection optical system includes a spectroscopic unit such as a prism or a diffraction grating, or a wavelength separation unit such as a dichroic mirror or an optical filter. The detection optical system is designed to disperse the light generated by light irradiation to biological particles, for example, and detect the dispersed light with a larger number of photodetectors than the number of fluorescent dyes with which the biological particles are labeled. A flow cytometer including such a detection optical system is called a spectral flow cytometer. Further, the detection optical system is designed to separate the light corresponding to the fluorescence wavelength band of a specific fluorescent dye from the light generated by the light irradiation to the biological particles, for example, and cause the corresponding photodetector to detect the separated light.

The detection unit 6102 may also include a signal processing unit that converts an electrical signal obtained by a photodetector into a digital signal. The signal processing unit may include an A/D converter as a device that performs the conversion. The digital signal obtained by the conversion performed by the signal processing unit can be transmitted to the information processing unit 6103. The digital signal can be handled as data related to light (hereinafter, also referred to as "light data") by the information processing unit 6103. The light data may be light data including fluorescence data, for example. More specifically, the light data may be data of light intensity, and the light intensity may be light intensity data of light including fluorescence (the light intensity data may include feature quantities such as area, height, and width).

### (Information Processing Unit)

The information processing unit 6103 includes a processing unit that performs processing of various kinds of data (light data, for example), and a storage unit that stores various kinds of data, for example. In a case where the processing unit acquires the light data corresponding to a fluorescent dye from the detection unit 6102, the processing unit can perform fluorescence leakage correction (a compensation process) on the light intensity data. In the case of a spectral flow cytometer, the processing unit also performs a fluorescence separation process on the light data, and acquires the light intensity data corresponding to the fluorescent dye. The fluorescence separation process may be performed by an unmixing method disclosed in JP 2011-232259 A, for example. In a case where the detection unit 6102 includes an image sensor, the processing unit may acquire morphological information about the biological particles, on the basis of an image acquired by the image sensor. The storage unit may be designed to be capable of storing the acquired light data. The storage unit may be designed to be capable of further storing spectral reference data to be used in the unmixing process.

In a case where the biological sample analyzer 6100 includes the sorting unit 6104 described later, the information processing unit 6103 can determine whether to sort the biological particles, on the basis of the light data and/or the morphological information. The information processing unit 6103 then controls the sorting unit 6104 on the basis of the result of the determination, and the biological particles can be sorted by the sorting unit 6104.

The information processing unit 6103 may be designed to be capable of outputting various kinds of data (such as light data and images, for example). For example, the information processing unit 6103 can output various kinds of data (such as a two-dimensional plot or a spectrum plot, for example) generated on the basis of the light data. The information processing unit 6103 may also be designed to be capable of accepting inputs of various kinds of data, and accepts a gating process on a plot by a user, for example. The information processing unit 6103 may include an output unit (such as a display, for example) or an input unit (such as a keyboard, for example) for performing the output or the input.

The information processing unit 6103 may be designed as a general-purpose computer, and may be designed as an information processing device that includes a CPU, a RAM, and a ROM, for example. The information processing unit 6103 may be included in the housing in which the light irradiation unit 6101 and the detection unit 6102 are included, or may be located outside the housing. Further, the various processes or functions to be executed by the information processing unit 6103 may be realized by a server computer or a cloud connected via a network.

### (Sorting Unit)

The sorting unit 6104 performs sorting of biological particles, in accordance with the result of determination performed by the information processing unit 6103. The sorting method may be a method by which droplets containing biological particles are generated by vibration, electric charges are applied to the droplets to be sorted, and the traveling direction of the droplets is controlled by an electrode. The sorting method may be a method for sorting by controlling the traveling direction of biological particles in the flow channel structure. The flow channel structure has a control mechanism based on pressure (injection or suction) or electric charge, for example. An example of the flow channel structure may be a chip (the chip disclosed in JP 2020-76736 A, for example) that has a flow channel structure in which the flow channel C branches into a recovery flow channel and a waste liquid flow channel on the downstream side, and specific biological particles are collected in the recovery flow channel.

### (3) Example of Sort Operation

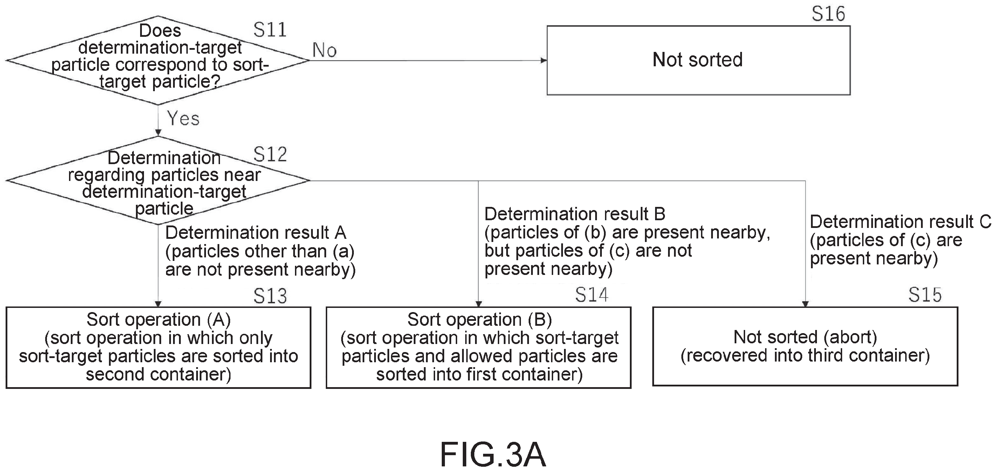

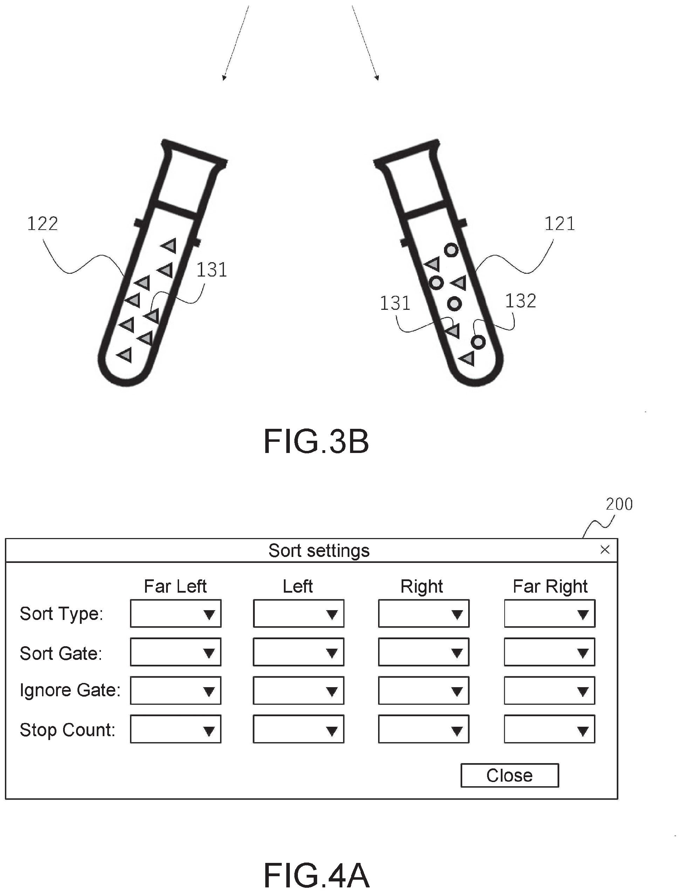

The following explains an example of a sort operation according to the present disclosure with reference to Fig. 2, Fig. 3A, and Fig. 3B. Fig. 2 illustrates a configuration example of a bio-particle sorting apparatus according to the present disclosure. Fig. 3A is a flowchart of a sort process executed by the bio-particle sorting apparatus. Fig. 3B is a schematic diagram for explaining sort products obtained by the sort process.

### (Configuration Example Of Apparatus)

A bio-particle sorting apparatus 100 illustrated in Fig. 2 includes a light irradiation unit 101, a detection unit 102, and an information processing unit (determining section) 103. Examples of the bio-particle sorting apparatus 100 include a cell sorter, a flow cytometer, and an imaging cytometer. The bio-particle sorting apparatus 100 further includes a sorting unit 104 that sorts bio-particles.

The light irradiation unit 101, the detection unit 102, the information processing unit 103, and the sorting unit 104 are equivalent to the light irradiation unit 6101, the detection unit 6102, the information processing unit 6103, and the sorting unit 6104 described in (2) above. Accordingly, the explanation of the light irradiation unit 6101, the detection unit 6102, the information processing unit 6103, and the sorting unit 6104 applies also to the light irradiation unit 101, the detection unit 102, the information processing unit 103, and the sorting unit 104. As described later, the sorting unit 104 may be configured to sort bio-particles in an open space or in a closed space. That is, the bio-particle sorting apparatus may be configured as a flow cytometer that sorts bio-particle in an open space or in a closed space.

In addition, the bio-particle sorting apparatus 100 may further include a liquid supplying section 112 that supplies various types of liquids (e.g., a sample liquid, a sheath liquid, etc.) to a chip 111 having a flow channel where a sample flows, a storage section 113, a display section 114, a user interface (UI) 115, and the like.

For example, the chip 111 may be a microfluidic chip. In addition, instead of the chip, a flow cell may be used. The chip 111 can be replaceably attached to the bio-particle sorting apparatus 100. The structure of a flow channel P that the chip 111 has may be designed as appropriate by those skilled in the art and particularly may be configured to be capable of forming a laminar flow including a sheath liquid and a sample liquid which is a sample including bio-particles.

The liquid supplying section 112 performs liquid supply of the sample liquid, which is the sample including the bio-particles, to the chip and/or liquid supply of the sheath liquid to the chip. For example, the liquid supplying section may include a pump and the like. With respect to the chip illustrated in Fig. 2, the liquid supplying section introduces the sample liquid to a sample liquid flow channel P11 and the sheath liquid to two sheath liquid flow channels P12a and P12b. The sample liquid flow channel P11 and the sheath liquid flow channels P12a and P12b merge to form a main flow channel P13. A sample liquid laminar flow supplied in the sample liquid flow channel P11 and sheath liquid laminar flows supplied in the sheath liquid flow channels P12a and P12b merge in the main flow channel P13 to form a sheath flow in which the sample liquid laminar flow is sandwiched by the sheath liquid laminar flows.

For example, the storage section 113 can store various types of programs to be used for controlling the bio-particle sorting apparatus and various types of data such as data related to results of sort determination and data related to the number of particles.

The display section 114 can display various types of screens to be used by a user for using the bio-particle sorting apparatus.

For example, the UI 115 may include various types of input/output apparatuses and the like. A user can operate the bio-particle sorting apparatus via the UI.

### (Process Procedure)

An example of a flow of processing performed by a sort operation executed by the bio-particle sorting apparatus 100 is explained with reference to Fig. 3. The process procedure is an example of a process procedure from sort determination based on a result of detection of light generated by light irradiation onto one determination-target particle until a sort operation. Note that the light irradiation may be executed by the light irradiation unit. In addition, the light detection may be executed by the detection unit.

When the bio-particle sorting apparatus 100 executes the sort operation (A) in which only sort-target particles are sorted into one containing space, the sort-target particles are recovered into a second container 122 by the sort operation.

When the bio-particle sorting apparatus 100 executes the sort operation (B) in which only sort-target particles and non-sort-target sort-allowed particles are sorted into an alternative containing space, the sort-target particles are recovered into a first container 121 by the sort operation. For example, the sort operation (B) can be executed when only the non-sort-target sort-allowed particles are present near the sort-target particles.

When these sort operations are not executed, the determination-target particles may be recovered into a third container 123. Alternatively, in this case, the determination-target particles may be recovered into another flow channel.

At Step S11, the bio-particle sorting apparatus 100 determines whether a determination-target particle is a sort-target particle.

When the determination-target particle is a sort-target particle, the bio-particle sorting apparatus 100 proceeds to Step S12.

When the determination-target particle is not a sort-target particle, the bio-particle sorting apparatus 100 proceeds to Step S13.

Step S11 may particularly be executed by the information processing unit 103.

At Step S12, the bio-particle sorting apparatus 100 determines to which of the particle populations (a) to (c) particles that can be present within a predetermined range around the determination-target particle (which is a sort-target particle) belong.
(a) particle population of sort-target particles;
(b) particle population of non-sort-target sort-allowed particles; and
(c) particle population of non-sort-target sort-unallowed particles.

Note that particles included in the bio-sample may be ones belonging to any of (a) to (c). For example, particles in the bio-sample may include particles belonging to the particle population (a), particles belonging to the particle population (b), and other particles (equivalent to particles belonging to the particle population (c)).

When, as a result of the determination, it is determined that particles belonging to the particle population (b) or (c) are not present within the predetermined range (displayed as a determination result A in the figure), the bio-particle sorting apparatus 100 proceeds to Step S13. Note that, also when particles belonging to the particle population (a) are present within the predetermined range (i.e., when one or more additional sort-target particles are present within the predetermined range around the sort-target particle), the bio-particle sorting apparatus 100 may proceed to Step S13.

When, as a result of the determination, it is determined that particles belonging to the particle population (b) are present within the predetermined range, but particles belonging to the particle population (c) are not present (displayed as a determination result B in the figure), the bio-particle sorting apparatus 100 proceeds to Step S14. When, as a result of the determination, it is determined that particles belonging to the particle population (c) are present within the predetermined range (displayed as a determination result C in the figure), the bio-particle sorting apparatus 100 proceeds to Step S15. Note that, even if particles belonging to the particle population (b) are present within the predetermined range, the bio-particle sorting apparatus 100 proceeds to Step S15 when it is determined that particles belonging to the particle population (c) are present within the predetermined range. As described later, mutually different operations are executed at Steps S13, S14, and S15. That is, the bio-particle sorting apparatus 100 selects an operation that should be executed depending on the types of particles present within the predetermined range.

Step S12 may particularly be executed by the information processing unit 103.

For example, the bio-particle sorting apparatus can determine whether particles are present within the predetermined range around the determination-target particle on the basis of the time at which light generated by light irradiation onto the determination-target particle has been detected and the time at which light generated by light irradiation onto a non-determination-target particle flowing before and/or after the determination-target particle has been detected.

For example, the speed of these particles in a flow channel C can be calculated on the basis of the difference between the time at which light generated by light irradiation at one position onto a particle flowing in the flow channel has been detected and the time at which light generated by light irradiation at another position has been detected. For the calculation, the distance between the two irradiation positions may be determined in advance, and the speed of a microparticle can be determined on the basis of the difference the two detection times and the distance.

On the basis of the difference between the time at which light generated by light irradiation onto the determination-target particle has been detected and the time at which light generated by light irradiation onto the non-determination-target particle has been detected, the bio-particle sorting apparatus can determine whether a non-determination-target particle is present within the predetermined range. More specifically, on the basis of whether the difference is equal to or smaller than a predetermined value, the bio-particle sorting apparatus can determine whether a non-determination-target particle is present within the predetermined range. In this manner, the predetermined range may be a range identified on the basis of the predetermined value related to the difference between times.

The predetermined value can be identified in advance. For example, the predetermined value can be identified by identifying, at the time of formation of a droplet having a particle, the degree of separation between the determination-target particle and a non-determination-target particle at which the non-determination-target particle will no longer be contained in the droplet.

Note that, in the present specification, the predetermined value is also referred to as "guard time (Guard Time)." In addition, since the predetermined range can be identified on the basis of the predetermined value as described above, in the present specification, the term "guard time" is used as meaning the predetermined range in some cases.

In addition, whereas it is assessed whether a particle is present within the predetermined area on the basis of the speed of particles in the technique explained above, it may be assessed whether a particle is present within the predetermined area by another technique in the present disclosure.

As explained above, the bio-particle sorting apparatus can determine whether to recover a determination-target particle on the basis of whether a non-determination-target particle is present within the predetermined range around the determination-target particle and/or on the basis of the type of the non-determination-target particle.

By determining not to sort a determination-target particle when a non-determination-target particle is present within the predetermined range, as described above, the purity of target particles in recovered particles can be increased.

On the other hand, in a case in which a non-determination-target particle is present within the predetermined range, and the non-determination-target particle is allowed to be included in a sort product (e.g., in a case in which the non-determination-target particle does not adversely affect analysis or use of the sort product or in other cases), recovering the determination-target particle results in recovering also the non-determination-target particle in the same container, which somewhat lowers the purity of determination-target particles in the sort product, but can increase the recovery rate of sort-target particles.

At Step S13, the bio-particle sorting apparatus 100 executes a sort operation in which the determination-target particle (which is a sort-target particle) is sorted into the second container 122.

Since it has been determined that a particle belonging to the particle population (b) or (c) is not present within the predetermined range around the determination-target particle, the determination-target particle is recovered into the second container 122 by executing the sort operation.

Accordingly, by repeating Step S13, a sort product acquired in the second container is a sort product including sort-target particles at an extremely high purity. For example, the purity may be equal to or higher than 90%, particularly equal to or higher than 93%, more particularly equal to or higher than 95%, and still more particularly equal to or higher than 97%, equal to or higher than 98%, or equal to or higher than 99%. The purity is the proportion of the number of sort-target particles to the number of all particles in the sort product. Note that the sort product includes particles other than sort-target particles in some cases, and the purity may be equal to or lower than 100%.

At Step S13, particularly the sorting unit 104 in the bio-particle sorting apparatus 100 executes the sort operation. As explained in (2), the sort operation may be an operation in which the sorting unit 104 generates a droplet including a sort-target particle by vibration, applies electric charge to the droplet, and controls the advancing direction of the droplet using an electrode to thereby cause the droplet to advance to the second container 122. In this manner, the sort operation may be a sort operation in which bio-particles are sorted in an open space. Alternatively, the sort operation may be another sort operation explained above. The sort operation may be a sort operation in a closed space, for example a sort operation by suction or the like, or the like.

In this manner, at Step S13, the sort operation in which only sort-target particles are sorted into one containing space may be executed.

At Step S14, the bio-particle sorting apparatus 100 executes a sort operation in which the determination-target particle (which is a sort-target particle) is sorted into the first container 121.

Since a particle belonging to the particle population (b) is present, but a particle belonging to the particle population (c) is not present within the predetermined range around the determination-target particle in addition to the sort-target particle, the particle belonging to the particle population (b) is recovered into the first container 121 by executing the sort operation.

Accordingly, a sort product obtained by repeating Step S14 is a sort product including non-sort-target sort-allowed particles in addition to sort-target particles. For example, the purity of sort-target particles in the sort product may be lower than the purity of sort-target particles in the sort product acquired by repeating Step S13 and, for example, may be equal to or lower than 70%, equal to or lower than 65%, or equal to or lower than 60%. In addition, for example, the purity of the sort product obtained by repeating Step S14 may be equal to or higher than 30%, equal to or higher than 35%, or equal to or higher than 40%.

If it is attempted to sort only sort-target particles when, among particles included in a bio-sample, the content proportion of allowed particles is high, and the proportion of sort-target particles is very low, the sort efficiency of sort-target particles can lower since the number of the allowed particles is large. By sorting sort-target particles even when allowed particles are present within the predetermined range as described above according to the present disclosure, the sort efficiency of sort-target particles can be increased.

At Step S14, particularly the sorting unit 104 in the bio-particle sorting apparatus 100 executes the sort operation. As explained in (2), the sort operation may be an operation in which the sorting unit 104 generates a droplet including a sort-target particle by vibration, applies electric charge to the droplet, and controls the advancing direction of the droplet using an electrode to thereby cause the droplet to advance to the first container 121. In this manner, the sort operation may be a sort operation in which bio-particles are sorted in an open space. Alternatively, the sort operation may be another sort operation explained above. The sort operation may be a sort operation in a closed space, for example a sort operation by suction or the like, or the like.

In this manner, at Step S14, the sort operation in which only sort-target particles and non-sort-target sort-allowed particles are sorted into an alternative containing space may be executed.

At Step S15, the bio-particle sorting apparatus 100 recovers the determination-target particle into the third container 123.

Since the particle belonging to the particle population (c) is present within the predetermined range around the determination-target particle, the determination-target particle is recovered into the third container 123, and also the particle belonging to the particle population (c) is recovered into the third container 123.

At Step S15, particularly the sorting unit 104 in the bio-particle sorting apparatus 100 executes the recovery operation. For example, the recovery operation may be an operation in which the particles are allowed to advance to the third container 123 without controlling the advancing direction of a generated droplet using an electrode as explained in (2). A product in the third container may be processed a waste liquid or may be used as a sample for other sort-target particles.

At Step S16, the bio-particle sorting apparatus 100 recovers the determination-target particle into a third container 123.

At Step S16, particularly the sorting unit 104 in the bio-particle sorting apparatus 100 executes the recovery operation. For example, the recovery operation may be an operation in which the particles are allowed to advance to the third container 123 without controlling the advancing direction of a generated droplet using an electrode as explained in (2). A product in the third container may be processed a waste liquid or may be used as a sample for other sort-target particles.

By executing the process procedure as mentioned above, a sort product including sort-target particles at a high purity is formed in the second container, and a sort product including sort-target particles at a purity which is lower than that of the sort product in the second container but is relatively high is formed in the first container. Fig. 3B illustrates a schematic diagram illustrating only a portion S surrounded by a broken line in Fig. 2. As illustrated in Fig. 3B, a sort product including sort-target particles 131 at a high purity is obtained in the second container 122, and a sort product including non-sort-target sort-allowed particles 132 in addition to the sort-target particles 131 is obtained in the first container 121. The purity of the sort-target particles in the first container 121 is lower than the purity of the sort-target particles in the second container 122.

In this manner, the present disclosure enables acquisition of two or more types of sort products with mutually different purities of sort-target particles from one bio-sample.

In addition, since the sort product in the first container includes also particles which are not sort targets in addition to sort-target particles, but the particles which are not the sort targets are sort-allowed particles, the sort product can be used in analysis in which the presence of the particles is allowed and the like.

In addition, by obtaining the sort product in the first container in addition to the sort product in the second container, the yield of sort-target particles can be increased.

### (4) Example of Particle Count

The bio-particle sorting apparatus according to the present disclosure may be configured to count the number of particles belonging to the particle population (b) described in (3), that is, the number of non-sort-target sort-allowed particles. The number of the particles may be the number of the particles in any one containing space (particularly, any one container) and particularly may be the number of the particles in the first containing space. For example, the counting may be performed by the information processing unit counting the number of times it is determined that a particle (e.g., a determination-target particle, a particle around a determination-target particle, etc.) belongs to the particle population (b).

Note that, in the present specification, the number of particles belonging to the particle population (a), the number of particles belonging to the particle population (b), and the number of particles belonging to the particle population (c) are also referred to as the "number of (a)," the "number of (b)," and the "number of (c)." In addition, these numbers may be the numbers of the particles in any one containing space (particularly, any one container).

For example, the number of (b) is useful for identifying the composition ratio of particles in a sample. In addition, the number of (b) is useful also for identifying the recovery efficiency (also referred to as "efficiency") of sort-target particles. Particularly, these are particularly useful in a case in which the composition ratio of (b) in a sample is high.

The bio-particle sorting apparatus according to the present disclosure may be configured to display the number of (b) or a value or an index calculated using the number of (b).

Examples of the value calculated using the number of (b) include a value (particularly, a proportion) calculated using the number of (b) as the numerator or as one element of the numerator, and a value (particularly, a proportion) calculated using the number of (b) as the denominator or as one element of the denominator, and these are not the sole examples. Examples of the value calculated using the number of (b) include the recovery efficiency of sort-target particles described above.

For example, the value may be a proportion represented by the following formula. $Proportion 1 = \left(a\right) / \left(\left(a\right)+\left(b\right)+\left(c\right)\right)$

In the formula, (a), (b), and (c) represent the number of (a), the number of (b), and the number of (c). The same applies also to the other formulae mentioned below.

In addition, the value may be a proportion represented by the following formula. $Proportion 2 = \left(b\right) / \left(\left(a\right)+\left(b\right)+\left(c\right)\right)$

In addition, the value may be a proportion represented by the following formula. $Proportion 3 = \left(\left(a\right)+\left(b\right)\right) / \left(\left(a\right)+\left(b\right)+\left(c\right)\right)$

Examples of the index calculated using the number of (b) include a determination result based on the number of (b), and a determination result based on the value calculated using the number of (b). For example, the determination result may be, for example, a display meaning that the recovery efficiency is good (e.g., characters or a symbol representing that the recovery efficiency is good such as Good) or a display meaning that the recovery efficiency is not good (e.g., characters or a symbol representing that the recovery efficiency is not good such as Not Good). For example, such a determination result may be output when the value is equal to or greater than a predetermined threshold or smaller than a threshold.

The bio-particle sorting apparatus according to the present disclosure may certainly display a value or an index calculated without using the number of (b). Furthermore, the bio-particle sorting apparatus according to the present disclosure may display the number of (a) and/or the number of (c).

Examples of the value calculated without using the number of (b) include a value (particularly, a proportion) calculated using the number of (a) as the numerator or as one element of the numerator, but this is not the sole example. Examples of the value calculated using the number of (a) include the recovery efficiency of sort-target particles described above. For example, the value may be a proportion represented by the following formula. $Proportion 4 = \left(a\right) / \left(\left(a\right)+\left(c\right)\right)$

Examples of the index calculated without using the number of (b) include a determination result based on the number of (a) and a determination result based on the value calculated using the number of (a). For example, the determination result may be, for example, a display meaning that the recovery efficiency is good or is not good. For example, such a determination result may be output when the recovery efficiency is equal to or higher than a predetermined threshold or lower than a threshold.

In addition, the bio-particle sorting apparatus according to the present disclosure may calculate the following proportion 5 and/or proportion 6. $Proportion 5 = \left(a\right) / \left(\left(a\right)+\left(b\right)\right)$ $Proportion 6 = \left(b\right) / \left(\left(a\right)+\left(b\right)\right)$

The bio-particle sorting apparatus (particularly, the display section) according to the present disclosure may display any one or more of the proportions (particularly, the proportions 1 to 6) described above. The proportions may be proportions in any one containing space described above and particularly may be proportions in the first containing space.

In one embodiment, the bio-particle sorting apparatus (particularly, the display section) can display the proportion 5. For example, the proportion 5 may be a proportion in any one containing space described above and particularly may be a proportion in the first containing space.

Since the bio-particle sorting apparatus according to the present disclosure can have the display section that displays information about the purity of sort-target particle included in the first containing space, the information can include the proportions.

In addition, the bio-particle sorting apparatus according to the present disclosure may calculate the following total number 1 and/or total number 2. $Total number 1 = \left(a\right) + \left(b\right)$ $Total number 2 = \left(a\right) + \left(b\right) + \left(c\right)$

The bio-particle sorting apparatus (particularly, the display section) according to the present disclosure may display any one or more of the total numbers (particularly, the total numbers 1 and 2) described above. The total numbers may be total numbers of particles in any one containing space described above and particularly may be proportions in the first containing space.

Since the bio-particle sorting apparatus according to the present disclosure can have the display section that displays information about the purity of sort-target particle included in the first containing space, the display section can display the total numbers as part of the information about the purity or as information different from the information about the purity.

In addition, the number of (b) counted per unit time may be calculated in the present disclosure. Similarly, the number of (a) counted per unit time or the number of (c) counted per unit time may be calculated. The bio-particle sorting apparatus (particularly, the display section) according to the present disclosure may display a value related to such event frequencies.

For example, it is conceivable also to use, for example, (a)/((a)+(c)) as purity, and the extent to which (a) is included relative to (a)+(b)+(c) can be known by using the number of (b). Moreover, the present disclosure makes it possible to know also the number of (b) itself.

In the present disclosure, as an index related to a sort product intended to sort only particles belonging to the particle population (a) (the sort product recovered in the first container described above), a sort-target particle ratio related to (a) (particularly, a sort-target cell ratio) may be represented by (a)/((a)+(b)), for example.

In addition, in a case in which a sort product including only particles belonging to the particle population (a) and a sort product including only particles belonging to the particle population (b) are obtained, (a)/((a)+(c)) may be used as the purity of (a). In this case, the true proportion of (a) may be determined by presenting the proportion of (b).

By displaying the number of (b) or a value or an index calculated using the number of (b), it is possible to provide a user with information useful for bio-sample analysis in a case in which a sample includes particles of (b), particularly in a case in which many particles belonging to the particle population (b) are included in a sample or in other cases.

In addition, a predetermined particle sort operation may be executed on the basis of the number of (b). For example, the bio-particle sorting apparatus may be configured to execute a particle sort operation in the sort mode in which two or more types of sort products are acquired when the number of particles belonging to the particle population (b) is equal to or greater than a predetermined value or when the ratio of the number of particles belonging to the particle population (b) to the number of particles belonging to the particle population (a) is equal to or greater than a predetermined value. In this manner, the bio-particle sorting apparatus according to the present disclosure may automatically adopt a particular sort mode depending on the number of (b).

### (5) Example of Sort Mode Setting Screen

The bio-particle sorting apparatus according to the present disclosure may be configured to be capable of executing also a particle sort operation in another sort mode in addition to the sort mode in which two or more types of sort products are acquired.

For example, the bio-particle sorting apparatus may execute a sort process in which a determination-target particle is sorted when the determination result A described in (3) is obtained with respect to the determination-target particle and abort a determination-target particle without sorting it when the determination result B or C described in (3) is obtained with respect to the determination-target particle. That is, the bio-particle sorting apparatus may be configured to be capable of executing a sort mode in which a sort product with a high purity of sort-target particles is acquired.

For example, the setting of a sort mode may be performed by accepting user input to a screen that the bio-particle sorting apparatus causes the display section to display.

In one embodiment, the bio-particle sorting apparatus is configured to cause the display section to display a screen used to prompt a user to select a sort mode, and the screen may be configured to be capable of allowing selection of the sort mode in which two or more types of sort products are acquired. Examples of such a screen are explained with reference to Figs. 4A to 4H. A screen 200 illustrated in the figures is an example of a screen in a case in which the bio-particle sorting apparatus is configured to be capable of recovering a sort product in each of four containers.

The bio-particle sorting apparatus (e.g., the display section) displays the screen (e.g., window) 200 illustrated in Fig. 4A. For example, the screen may be displayed at any stage prior to execution of a sort operation on a bio-sample, but may be displayed at another stage. On the screen 200, Far Left, Left, Right, and Far Right are displayed as individual names of the four containers. These displays also mean the positions of the containers.

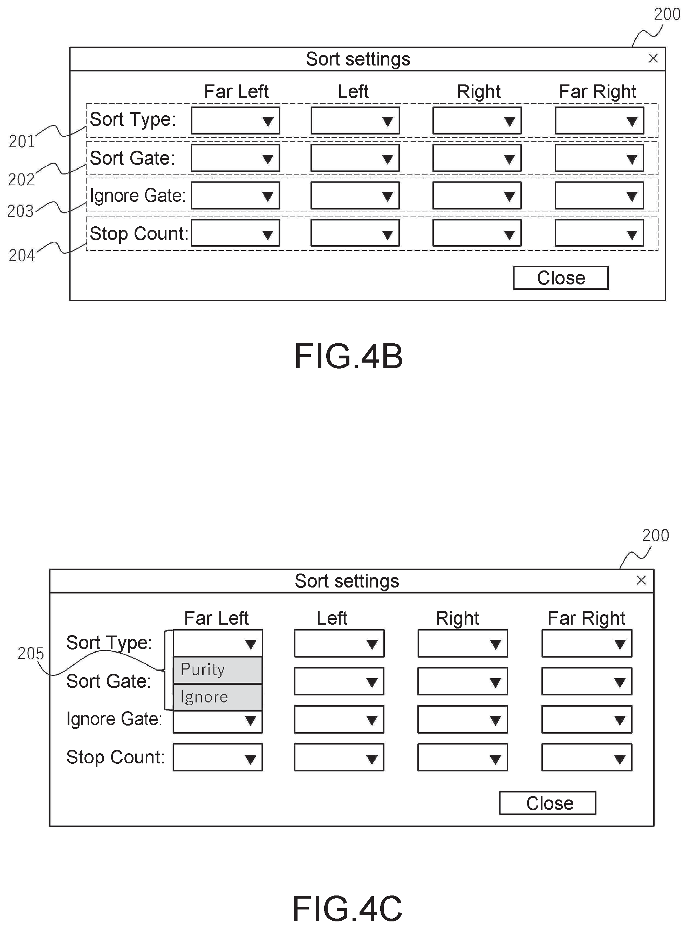

As illustrated in Fig. 4B, the screen 200 has a sort scheme selection field 201 (Sort Type), a sort gate selection field 202 (Sort Gate), a sort-allowable gate selection field 203 (Ignore Gate), and a sort stop count selection field 204 (Stop Count) associated with each of the four containers. Note that the sort-allowable gate may be called an ignore gate.

For example, each selection field may be displayed as a drop-down box as illustrated in the figure, but may be displayed in another manner. Each selection field is explained below.

When a user selects the sort scheme selection field 201 in order to designate a sort product to be formed in the container Far Left, for example, as illustrated in Fig. 4C, a list of selectable sort schemes is displayed. In the figure, a purity priority scheme (Purity) and an ignore scheme (Ignore) are displayed as selectable sort types in the list of selectable sort schemes.

By the user selecting a desired sort scheme from the sort schemes, a sort scheme for acquiring a sort product to be formed in the container Far Left is identified.

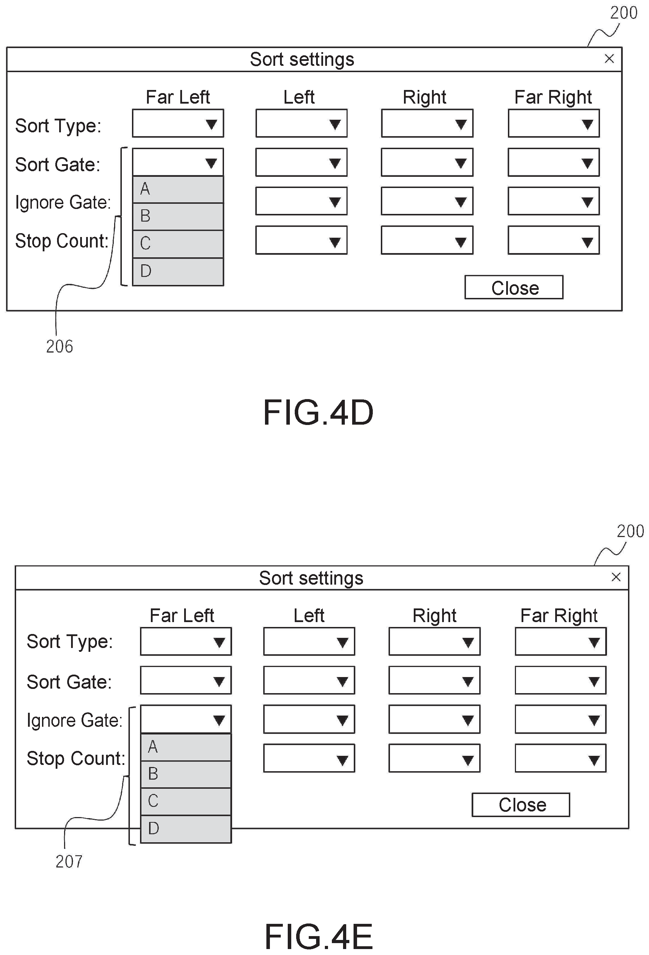

In addition, when the user selects the sort gate selection field 202 in order to designate sort-target particles that should be included in the sort product to be formed in the container Far Left, for example, as illustrated in Fig. 4D, a list of selectable gates is displayed. In the figure, four gates A to D are displayed as selectable gates in the list. Each gate may be preset by the user. For example, the gate setting may be executed as appropriate by the user depending on sort-target particles and/or a bio-sample.

By the user selecting a desired gate from the sort gates, sort-target particles that should be sorted into the container Far Left are identified.

In addition, when the user selects the sort-allowable gate selection field 203 in order to designate particles that are allowed to be included in the sort product to be formed in the container Far Left but are not sort targets, for example, as illustrated in Fig. 4E, a list of selectable gates is displayed. In the figure, the four gates A to D are displayed as selectable gates in the list. Each gate may be set as appropriate by the user.

By the user selecting a sort-allowable gate from the gates, particles that are allowed to be sorted into the container Far Left but are not sort targets are identified.

In addition, in order for the user to designate the number of particles that should be recovered into the container Far Left, the sort stop count selection field 204 may be configured to allow selection of a desired number from a list or may be configured to allow input of a desired number. The sort stop count may be such that, when the number of sorted particles has reached the number selected or input in the field, an operation in which particles are sorted into the container is stopped.

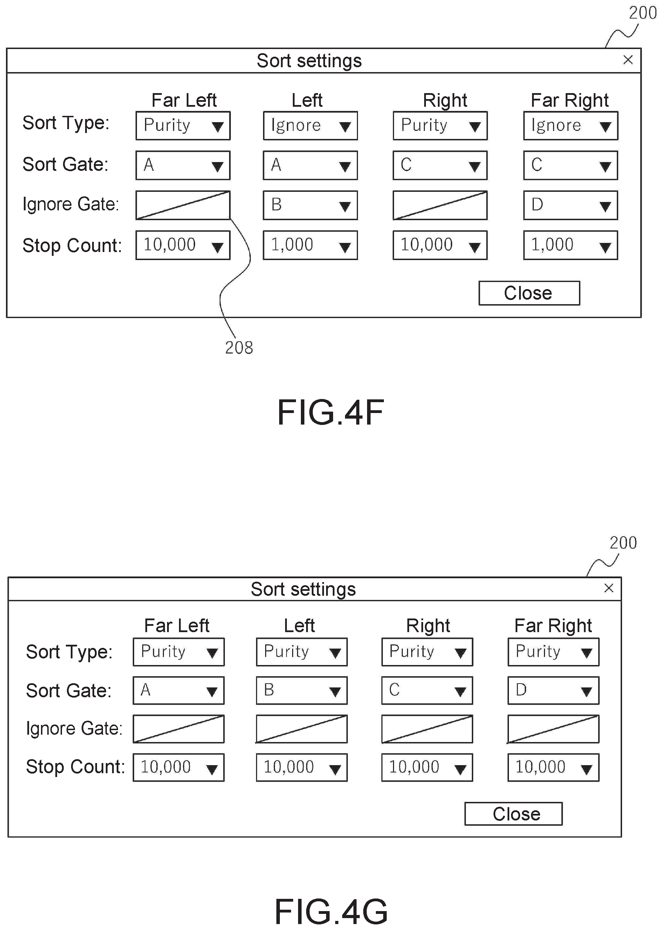

For example, the sort-allowable gate selection field may be displayed as being selectable or may be displayed as being unselectable depending on the sort scheme selected in the sort scheme selection field. For example, the sort-allowable gate selection field need not be taken into consideration with respect to the purity priority scheme (Purity). Accordingly, the bio-particle sorting apparatus may make the sort-allowable gate selection field unselectable and, for example, may disable the drop-down box in response to the purity priority scheme being selected in the sort scheme selection field. An example of the state in which the sort-allowable gate selection field is made unselectable is represented by a reference character 208 in Fig. 4F.

On the other hand, in the ignore scheme (Ignore), the sort-allowable gate selection field needs to be taken into consideration. Accordingly, the bio-particle sorting apparatus may make the sort-allowable gate selection field selectable and, for example, may enable the drop-down box in response to the ignore scheme being selected in the sort scheme selection field.

In this manner, the bio-particle sorting apparatus may change the sort-allowable gate selection field depending on the selected sort scheme. Thereby, it is possible to prevent the user from making an unnecessary gate selection.

In Fig. 4F, the screen after the settings related to the four containers is displayed.

With respect to the container Far Left, the purity priority scheme is selected as the sort scheme, the gate A is selected as the sort gate, and 10,000 is selected as the sort stop count.

With respect to the container Left, the ignore scheme is selected as the sort scheme, the gate A is selected as the sort gate, the gate B is selected as the sort-allowable gate, and 1,000 is selected as the sort stop count.

That is, on the basis of the settings related to the container Far Left and the settings related to the container Left, a sort operation according to the present disclosure is executed on particles belonging to the gate A, and two types of sort products with mutually different purities of sort-target particles (particles belonging to the gate A) are obtained.

In addition, in the figure, the purity priority scheme and the ignore scheme are selected for the same sort-target particles (particles belonging to the gate A). When both the purity priority scheme and the ignore scheme are set for the same sort-target particles (e.g., particles belonging to the same gate) in this manner, for example, a sort operation in the purity priority scheme may be preferentially allocated to certain sort-target particles.

In addition, with respect to the container Right, the purity priority scheme is selected as the sort scheme, the gate C is selected as the sort gate, and 10,000 is selected as the sort stop count.

With respect to the container Far Right, the ignore scheme is selected as the sort scheme, the gate C is selected as the sort gate, the gate D is selected as the sort-allowable gate, and 1,000 is selected as the sort stop count.

That is, on the basis of the settings related to the container Right and the settings related to the container Far Right, a sort operation according to the present disclosure is executed on particles belonging to the gate C, and two types of sort products with mutually different purities of sort-target particles (particles belonging to the gate C) are obtained.

In addition, in the figure, the purity priority scheme and the ignore scheme are selected for the same sort-target particles (particles belonging to the gate C). As described above, when both the purity priority scheme and the ignore scheme are set for the same sort-target particles, for example, a sort operation in the purity priority scheme may be preferentially allocated to certain sort-target particles.

In this manner, the bio-particle sorting apparatus according to the present disclosure includes the display section that displays the screen used to prompt a user to select a sort mode, and the screen may be configured to allow selection of the sort mode in which two or more types of sort products are acquired.

In addition, it becomes possible to set various particle sort operations using such a screen.

For example, the bio-particle sorting apparatus is capable of a particle sort operation in a sort mode in which sort products with high purities of two or more types of sort-target particles are acquired by executing a sort operation only by the purity priority scheme for each of the two or more types of sort-target particles. For example, the bio-particle sorting apparatus may be configured to be capable of executing a sort mode in which a sort product with a high purity of sort-target particles A, a sort product with a high purity of sort-target particles B, a sort product with a high purity of sort-target particles C, and a sort product with a high purity of sort-target particles D are acquired. An example of a screen set for executing a particle sort operation in such a sort mode is illustrated in Fig. 4G. As illustrated in the figure, the purity priority scheme may be selected as the sort scheme for each of the sort-target particles A to D.

In addition, the bio-particle sorting apparatus may be configured to be capable of executing a particle sort operation in a particle sort operation in which two types of sort products with mutually different purities are obtained according to the present disclosure, for each of one or more types of sort-target particles. An example of screen settings for executing the particle sort operation is as explained with reference to Fig. 4F above, and the screen in the figure is set such that a particle sort operation in a sort mode in which two types of sort products with mutually different purities are obtained is executed for each of two types of sort-target particles (particles belonging to the gate A and particles belonging to the gate C).

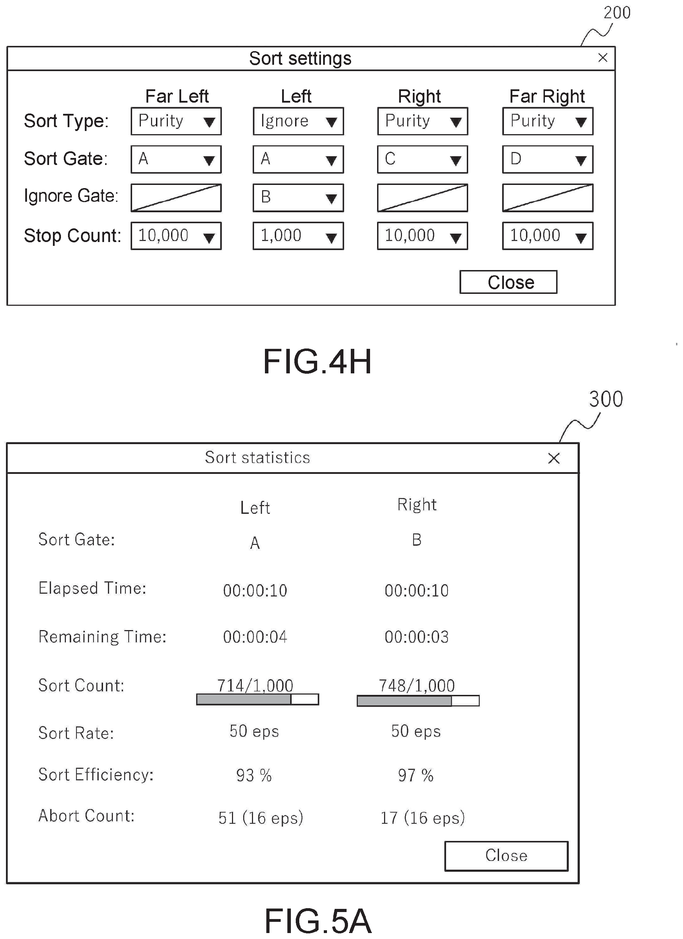

In addition, the bio-particle sorting apparatus may execute a particle sort operation in a sort mode in which a sort product with a high purity is acquired for each of one or more types of sort-target particles and execute a particle sort operation in which two types of sort products with mutually different purities are obtained according to the present disclosure for each of one or more other types of sort-target particles. An example of a screen set for executing a particle sort operation in such a sort mode is illustrated in Fig. 4H. The screen in the figure is set such that a particle sort operation in a sort mode in which two types of sort products with mutually different purities are obtained for one type of sort-target particles (particles belonging to the gate A) is executed, and the purity priority scheme is selected as the sort scheme for each of two types of sort-target particles (particles belonging to the gate C and particles belonging to the gate D).

### (6) Example of Screen to Prompt to Switch Sort Mode

The bio-particle sorting apparatus according to the present disclosure may be configured to allow switching of the sort mode during a particle sort operation on a sample.

For example, the proportion of sort-target particles and/or the proportion of non-sort-target sort-allowable particles are known only after a particle sort operation is performed, in some cases. By making it possible to change the sort mode at the stage when the proportions are known, an appropriate sort mode corresponding to the proportions can be selected.

In this manner, by displaying a screen used to prompt to select a sort mode during a particle sort operation, a particle sort operation corresponding to the needs of a user becomes possible.

Examples of the display mode of the screen are explained with reference to Figs. 5A to 5C. Fig. 5A is an example of a screen representing the situation of a sort operation. The screen illustrated in the figure represents the situation in which sorting of particles belonging to the gate A and sorting of particles belonging to the gate B are being executed from a certain bio-sample. In the figure, a sort operation in which mutually different sort products are formed in the two containers (Right and Left) is being performed.

Sort Gate represents the gate of sort-target particles sorted into each container. Elapsed Time represents the elapsed time of the sort operation. Remaining Time represents the remaining time of the sort operation. Sort Count represents the number of sorted sort-target particles. Sort Rate represents the rate at which the sort operation is performed, and eps is (number of events/second) and represents the frequency of a relevant event. Sort Efficiency represents the sort efficiency. Abort Count represents the number of times of abort.

In accordance with such values related to sort operation results, the bio-particle sorting apparatus can display a screen used to prompt to select a sort mode.

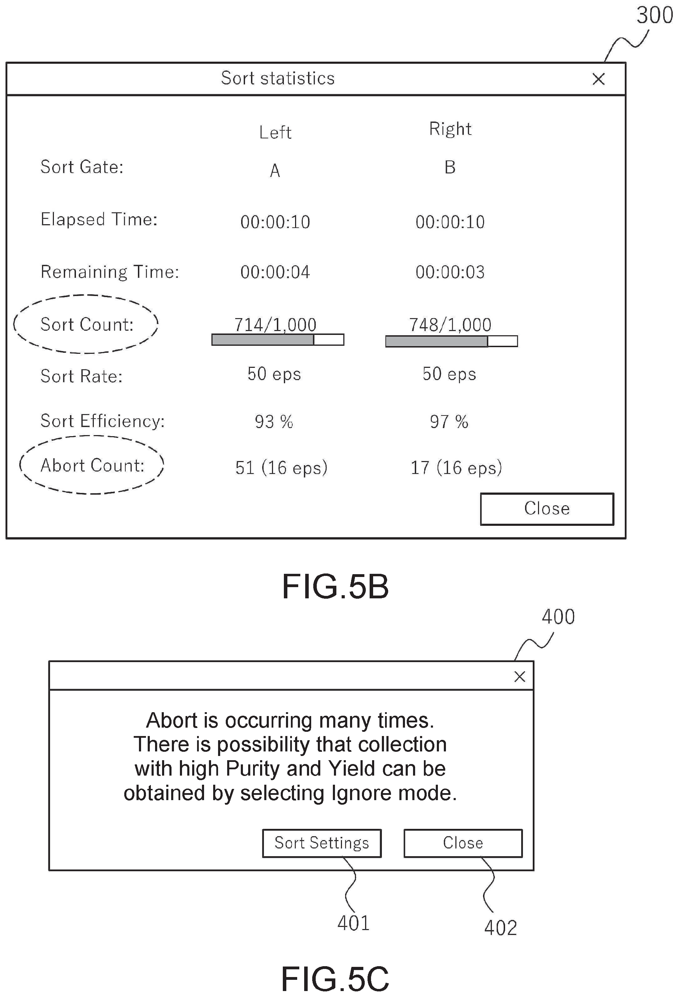

For example, as illustrated in Fig. 5B, on the basis of Abort Count, particularly on the basis of Sort Count and Abort Count, a screen 400 that prompts to select a sort mode may be displayed. An example of the screen is illustrated in Fig. 5C. As illustrated in the figure, the screen represents that Abort Count is large. Furthermore, the screen represents that, by adopting another sort scheme (Ignore mode), there is a possibility that a sort product with a high Purity and Yield can be obtained. By such a display, it is possible to prompt a user to change the sort mode.

Furthermore, the screen displays a button 401 (Sort Settings) for starting changing the sort mode setting. In response to selection of the button, the bio-particle sorting apparatus can display a sort operation setting screen like the one illustrated in Fig. 4A explained above. Thereby, the sort mode setting can be changed simply and conveniently.

In addition, the screen displays also a button 402 (Close) for closing the screen 400. In response to selection of the button, the bio-particle sorting apparatus closes the screen 400. For example, since it is conceivable also that the user does not want to change the sort settings during a sort operation, the button allows such a case to be accommodated.

The bio-particle sorting apparatus may present a screen used to prompt to select a sort mode like the one illustrated in Fig. 5C on the basis of the situation of a sort operation.

For example, the bio-particle sorting apparatus may present the screen, for example, when the number of Abort Count is equal to or greater than a predetermined value. The predetermined value may be a value that the apparatus has in advance or may be a value set by a user. The predetermined value may be set as appropriate by those skilled in the art.

In several embodiments, the bio-particle sorting apparatus may present a screen used to prompt to select the sort mode in accordance with the ratio between the value of Sort Count and the value of Abort Count. For example, when the number of Abort Count is, for example, equal to or greater than, 1.5 times or greater than, two times or greater than, 2.5 times or greater than, or three times or greater than the number of Sort Count, the bio-particle sorting apparatus can present the screen.

In this manner, by prompting to change the sort mode when the number of Abort Count is large, a sort process suited for the composition of a sample can be executed.

Note that Abort Count may mean the number of times it is determined that the determination-target particle is a sort-target particle, but it is determined not to sort a determination-target particle because a non-determination-target particle is present within the predetermined range around the determination-target particle (e.g., because the non-determination-target particle is a non-sort-target particle). Abort Count can be represented by the number of particles belonging to the particle population (b).

Sort Count may mean the number of times it is determined that a determination-target particle is a sort-target particle and it is determined to sort the determination-target particle. Sort Count can be represented by the number of particles belonging to the particle population (a).

Accordingly, the bio-particle sorting apparatus may cause the display section to display a screen used to prompt to select the sort mode in which two or more types of sort products are acquired when the number of particles belonging to the particle population (b) is equal to or greater than a predetermined value, or when the ratio of the number of particles belonging to the particle population (b) to the number of particles belonging to the particle population (a) is equal to or greater than a predetermined value.

### 2. Second Embodiment (Bio-Particle Sort Method)

The present disclosure relates also to a bio-particle sort method. The bio-particle sort method may include executing sort determination on particles included in a bio-sample such that sort-target particles and non-sort-target sort-allowed particles are sorted into a first containing space, and displaying information about the purity of the sort-target particles included in the first containing space. The sort determination may be executed as the bio-particle sorting apparatus according to the present disclosure (particularly, the determining section) described in "1." executes, and the explain applies also to the method. In addition, the display of the information may be executed as the bio-particle sorting apparatus (particularly, the display section) according to the present disclosure described in "1." executes, and the explain applies also to the method.

In addition, the bio-particle sort method may include executing a particle sort operation in which two or more types of sort products are acquired from one bio-sample, and the particle sort operation may be executed to at least acquire two types of sort products with mutually different purities of sort-target particles. The bio-particle sort method may include the particle sort operation executed by the bio-particle sorting apparatus according to the present disclosure described in "1.", and the explain applies also to the method. That is, the bio-particle sort method may be a particle sort operation in which two or more types of sort products are acquired from one bio-sample, and two types of sort products with mutually different purities of sort-target particles may at least be acquired in the particle sort operation.

Details of each step performed in the method according to the present disclosure is as explained in "1." and particularly is as explained with reference to the flowchart in Fig. 3, and the explanation applies also to the present embodiment.

In addition, the present disclosure provides also a program for causing a bio-particle sorting apparatus to execute the bio-particle sort method according to the present disclosure. For example, the program may be stored in the bio-particle sorting apparatus (e.g., a storage section) or may be stored in an information storage medium. For example, the information storage medium may be an SD card, a micro SD card, a CD, a DVD, a flash memory, or a magnetic recording medium.

Note that the present disclosure may be configured in the following manners.
[1] A bio-particle sorting apparatus including:
   a determining section that executes sort determination on particles included in a bio-sample, such that sort-target particles and non-sort-target sort-allowed particles are sorted into a first containing space; and
   a display section that displays information about purity of the sort-target particles included in the first containing space.
[2] The bio-particle sorting apparatus according to [1], in which
   the determining section executes the sort determination in a sort mode in which the particles included in the bio-sample are sorted into two or more containing spaces including the first containing space and a second containing space, and
   the sort mode is configured to be capable of executing at least one of a sort operation (A) or a sort operation (B), where
   the sort operation (A) is a sort operation in which only sort-target particles are sorted into the second containing space, and
   the sort operation (B) is a sort operation in which only sort-target particles and non-sort-target sort-allowed particles are sorted into the first containing space.
[3] The bio-particle sorting apparatus according to [2], in which
   the display section displays information about purity of the sort-target particles included in the second containing space.
[4] The bio-particle sorting apparatus according to any one of [1] to [3], in which
   as the information about the purity of the sort-target particles included in the first containing space, the bio-particle sorting apparatus is configured to be capable of displaying at least one of
      a proportion of a number of particles belonging to a particle population (a) to a total number of particles belonging to the particle population (a), a particle population (b), and a particle population (c) in the first containing space,
      a proportion of the number of particles belonging to the particle population (a) to a total number of particles belonging to the particle populations (a) and (b) in the first containing space, or
      a proportion of the number of particles belonging to the particle population (a) to a total number of particles belonging to the particle populations (a) and (c) in the first containing space, where
   the particle population (a) is a particle population of sort-target particles,
   the particle population (b) is a particle population of non-sort-target sort-allowed particles, and
   the particle population (c) is a particle population of non-sort-target sort-unallowed particles.
[5] The bio-particle sorting apparatus according to [3] or [4], in which
   as the information about the purity of the sort-target particles included in the second containing space, the bio-particle sorting apparatus is configured to be capable of displaying at least one of
      a proportion of a number of particles belonging to a particle population (a) to a total number of particles belonging to the particle population (a), a particle population (b), and a particle population (c) in the second containing space,
      a proportion of the number of particles belonging to the particle population (a) to a total number of particles belonging to the particle populations (a) and (b) in the second containing space, or
      a proportion of the number of particles belonging to the particle population (a) to a total number of particles belonging to the particle populations (a) and (c) in the second containing space, where
   the particle population (a) is a particle population of sort-target particles,
   the particle population (b) is a particle population of non-sort-target sort-allowed particles, and
   the particle population (c) is a particle population of non-sort-target sort-unallowed particles.
[6] The bio-particle sorting apparatus according to any one of [2] to [5], in which
   the determining section executes the sort determination in the sort mode in which the particles included in the bio-sample are sorted into the two or more containing spaces including at least the first containing space and the second containing space,
   the sort mode is configured to be capable of executing at least one of the sort operation (A) or the sort operation (B), where
   the sort operation (A) is a sort operation in which only sort-target particles are sorted into the second containing space, and
   the sort operation (B) is a sort operation in which only sort-target particles and non-sort-target sort-allowed particles are sorted into the first containing space, and
   the purity of the sort-target particles included in the first containing space and purity of the sort-target particles included in the second containing space are mutually different.
[7] The bio-particle sorting apparatus according to any one of [1] to [6], in which
   the determining section executes the sort determination in a sort mode in which the particles included in the bio-sample are sorted into two or more containing spaces including the first containing space, and
   as information about purity of the sort-target particles, the bio-particle sorting apparatus is configured to be capable of displaying at least one of
      a proportion of a number of particles belonging to a particle population (a) to a total number of particles belonging to the particle population (a), a particle population (b), and a particle population (c) in at least one containing space included in the two or more containing spaces,
      a proportion of the number of particles belonging to the particle population (a) to a total number of particles belonging to the particle populations (a) and (b) in the containing space, or
      a proportion of the number of particles belonging to the particle population (a) to a total number of particles belonging to the particle populations (a) and (c) in the containing space, where
   the particle population (a) is a particle population of sort-target particles,
   the particle population (b) is a particle population of non-sort-target sort-allowed particles, and
   the particle population (c) is a particle population of non-sort-target sort-unallowed particles.
[8] The bio-particle sorting apparatus according to [7], in which
   the bio-particle sorting apparatus is configured to be capable of executing sort operations (A') and (B') in a particle sort operation in the sort mode, where
   the sort operation (A') is a sort operation in which only sort-target particles are sorted into one containing space, and
   the sort operation (B') is a sort operation in which only sort-target particles and non-sort-target sort-allowed particles are sorted into an alternative containing space, and
   a sort product acquired in the one containing space by the sort operation (A') and a sort product acquired in the alternative containing space by the sort operation (B') are two types of sort products with mutually different purities.
[9] The bio-particle sorting apparatus according to any one of [2] to [8], in which
   the determining section is configured to determine, in a particle sort operation in the sort mode, to which of a particle population (a), a particle population (b), and a particle population (c) determination-target particles and particles that are possibly present within a predetermined range around the determination-target particles belong, where
   the particle population (a) is a particle population of sort-target particles,
   the particle population (b) is a particle population of non-sort-target sort-allowed particles, and
   the particle population (c) is a particle population of non-sort-target sort-unallowed particles, and
   the bio-particle sorting apparatus
      sorts, into the second containing space, the determination-target particles when the determination-target particles belong to the particle population (a) and when particles belonging to the particle population (b) or (c) are not present within the predetermined range, and
      sorts, into the first containing space, the determination-target particles when the determination-target particles belong to the particle population (a) and when particles belonging to the particle population (b) are present within the predetermined range but particles belonging to the particle population (c) are not present within the predetermined range.
[10] The bio-particle sorting apparatus according to any one of [2] to [9], in which
   in addition to the sort mode, the bio-particle sorting apparatus is configured to be capable of also executing a particle sort operation in another sort mode.
[11] The bio-particle sorting apparatus according to any one of [2] to [10], in which
   the bio-particle sorting apparatus is configured to cause the display section to display a screen used to prompt a user to select a sort mode, and
   the screen is configured to allow selection of the sort mode.
[12] The bio-particle sorting apparatus according to any one of [2] to [11], in which
   the bio-particle sorting apparatus executes a particle sort operation in the sort mode
   when a number of particles belonging to the particle population (b) is equal to or greater than a predetermined value, or
   when a ratio of the number of particles belonging to the particle population (b) to a number of particles belonging to the particle population (a) is equal to or greater than a predetermined value.
[13] The bio-particle sorting apparatus according to any one of [2] to [12], in which
   the bio-particle sorting apparatus is configured to be capable of switching a sort mode during a particle sort operation, and
   the bio-particle sorting apparatus causes the display section to display a screen used to prompt to select the sort mode
      when a number of particles belonging to the particle population (b) is equal to or greater than a predetermined value, or
      when a ratio of the number of particles belonging to the particle population (b) to a number of particles belonging to the particle population (a) is equal to or greater than a predetermined value.
[14] The bio-particle sorting apparatus according to any one of [1] to [13], in which
   the bio-particle sorting apparatus is configured to count a number of the non-sort-target sort-allowed particles.
[15] The bio-particle sorting apparatus according to any one of [1] to [14], in which
   the bio-particle sorting apparatus is configured as a flow cytometer that sorts bio-particles in an open space or a closed space.
[16] The bio-particle sorting apparatus according to any one of [1] to [15], in which
   the bio-particle sorting apparatus is an imaging flow cytometer.
[17] A bio-particle sort method including:
   executing sort determination on particles included in a bio-sample, such that sort-target particles and non-sort-target sort-allowed particles are sorted into a first containing space; and
   displaying information about purity of the sort-target particles included in the first containing space.

### Reference Signs List

100 bio-particle sorting apparatus
101 light irradiation unit
102 detection unit
103 information processing unit
6100 biological sample analyzer (bio-particle sorting apparatus)
6101 light irradiation unit
6102 detection unit
6103 information processing unit

## Claims

1. A bio-particle sorting apparatus comprising:
a determining section that executes sort determination on particles included in a bio-sample, such that sort-target particles and non-sort-target sort-allowed particles are sorted into a first containing space; and
a display section that displays information about purity of the sort-target particles included in the first containing space.

2. The bio-particle sorting apparatus according to claim 1, wherein
the determining section executes the sort determination in a sort mode in which the particles included in the bio-sample are sorted into two or more containing spaces including the first containing space and a second containing space, and
the sort mode is configured to be capable of executing at least one of a sort operation (A) or a sort operation (B), where
the sort operation (A) is a sort operation in which only sort-target particles are sorted into the second containing space, and
the sort operation (B) is a sort operation in which only sort-target particles and non-sort-target sort-allowed particles are sorted into the first containing space.

3. The bio-particle sorting apparatus according to claim 2, wherein
the display section displays information about purity of the sort-target particles included in the second containing space.

4. The bio-particle sorting apparatus according to claim 1, wherein
as the information about the purity of the sort-target particles included in the first containing space, the bio-particle sorting apparatus is configured to be capable of displaying at least one of
a proportion of a number of particles belonging to a particle population (a) to a total number of particles belonging to the particle population (a), a particle population (b), and a particle population (c) in the first containing space,
a proportion of the number of particles belonging to the particle population (a) to a total number of particles belonging to the particle populations (a) and (b) in the first containing space, or
a proportion of the number of particles belonging to the particle population (a) to a total number of particles belonging to the particle populations (a) and (c) in the first containing space, where
the particle population (a) is a particle population of sort-target particles,
the particle population (b) is a particle population of non-sort-target sort-allowed particles, and
the particle population (c) is a particle population of non-sort-target sort-unallowed particles.

5. The bio-particle sorting apparatus according to claim 3, wherein
as the information about the purity of the sort-target particles included in the second containing space, the bio-particle sorting apparatus is configured to be capable of displaying at least one of
a proportion of a number of particles belonging to a particle population (a) to a total number of particles belonging to the particle population (a), a particle population (b), and a particle population (c) in the second containing space,
a proportion of the number of particles belonging to the particle population (a) to a total number of particles belonging to the particle populations (a) and (b) in the second containing space, or
a proportion of the number of particles belonging to the particle population (a) to a total number of particles belonging to the particle populations (a) and (c) in the second containing space, where
the particle population (a) is a particle population of sort-target particles,
the particle population (b) is a particle population of non-sort-target sort-allowed particles, and
the particle population (c) is a particle population of non-sort-target sort-unallowed particles.

6. The bio-particle sorting apparatus according to claim 2, wherein
the determining section executes the sort determination in the sort mode in which the particles included in the bio-sample are sorted into the two or more containing spaces including at least the first containing space and the second containing space,
the sort mode is configured to be capable of executing at least one of the sort operation (A) or the sort operation (B), where
the sort operation (A) is a sort operation in which only sort-target particles are sorted into the second containing space, and
the sort operation (B) is a sort operation in which only sort-target particles and non-sort-target sort-allowed particles are sorted into the first containing space, and
the purity of the sort-target particles included in the first containing space and purity of the sort-target particles included in the second containing space are mutually different.

7. The bio-particle sorting apparatus according to claim 1, wherein
the determining section executes the sort determination in a sort mode in which the particles included in the bio-sample are sorted into two or more containing spaces including the first containing space, and
as information about purity of the sort-target particles, the bio-particle sorting apparatus is configured to be capable of displaying at least one of
a proportion of a number of particles belonging to a particle population (a) to a total number of particles belonging to the particle population (a), a particle population (b), and a particle population (c) in at least one containing space included in the two or more containing spaces,
a proportion of the number of particles belonging to the particle population (a) to a total number of particles belonging to the particle populations (a) and (b) in the containing space, or
a proportion of the number of particles belonging to the particle population (a) to a total number of particles belonging to the particle populations (a) and (c) in the containing space, where
the particle population (a) is a particle population of sort-target particles,
the particle population (b) is a particle population of non-sort-target sort-allowed particles, and
the particle population (c) is a particle population of non-sort-target sort-unallowed particles.

8. The bio-particle sorting apparatus according to claim 7, wherein
the bio-particle sorting apparatus is configured to be capable of executing sort operations (A') and (B') in a particle sort operation in the sort mode, where
the sort operation (A') is a sort operation in which only sort-target particles are sorted into one containing space, and
the sort operation (B') is a sort operation in which only sort-target particles and non-sort-target sort-allowed particles are sorted into an alternative containing space, and
a sort product acquired in the one containing space by the sort operation (A') and a sort product acquired in the alternative containing space by the sort operation (B') are two types of sort products with mutually different purities.

9. The bio-particle sorting apparatus according to claim 2, wherein
the determining section is configured to determine, in a particle sort operation in the sort mode, to which of a particle population (a), a particle population (b), and a particle population (c) determination-target particles and particles that are possibly present within a predetermined range around the determination-target particles belong, where
the particle population (a) is a particle population of sort-target particles,
the particle population (b) is a particle population of non-sort-target sort-allowed particles, and
the particle population (c) is a particle population of non-sort-target sort-unallowed particles, and
the bio-particle sorting apparatus
sorts, into the second containing space, the determination-target particles when the determination-target particles belong to the particle population (a) and when particles belonging to the particle population (b) or (c) are not present within the predetermined range, and
sorts, into the first containing space, the determination-target particles when the determination-target particles belong to the particle population (a) and when particles belonging to the particle population (b) are present within the predetermined range but particles belonging to the particle population (c) are not present within the predetermined range.

10. The bio-particle sorting apparatus according to claim 2, wherein
in addition to the sort mode, the bio-particle sorting apparatus is configured to be capable of also executing a particle sort operation in another sort mode.

11. The bio-particle sorting apparatus according to claim 2, wherein
the bio-particle sorting apparatus is configured to cause the display section to display a screen used to prompt a user to select a sort mode, and
the screen is configured to allow selection of the sort mode.

12. The bio-particle sorting apparatus according to claim 2, wherein
the bio-particle sorting apparatus executes a particle sort operation in the sort mode
when a number of particles belonging to the particle population (b) is equal to or greater than a predetermined value, or
when a ratio of the number of particles belonging to the particle population (b) to a number of particles belonging to the particle population (a) is equal to or greater than a predetermined value.

13. The bio-particle sorting apparatus according to claim 2, wherein
the bio-particle sorting apparatus is configured to be capable of switching a sort mode during a particle sort operation, and
the bio-particle sorting apparatus causes the display section to display a screen used to prompt to select the sort mode
when a number of particles belonging to the particle population (b) is equal to or greater than a predetermined value, or
when a ratio of the number of particles belonging to the particle population (b) to a number of particles belonging to the particle population (a) is equal to or greater than a predetermined value.

14. The bio-particle sorting apparatus according to claim 1, wherein
the bio-particle sorting apparatus is configured to count a number of the non-sort-target sort-allowed particles.

15. The bio-particle sorting apparatus according to claim 1, wherein
the bio-particle sorting apparatus is configured as a flow cytometer that sorts bio-particles in an open space or a closed space.

16. The bio-particle sorting apparatus according to claim 1, wherein
the bio-particle sorting apparatus is an imaging flow cytometer.

17. A bio-particle sort method comprising:
executing sort determination on particles included in a bio-sample, such that sort-target particles and non-sort-target sort-allowed particles are sorted into a first containing space; and
displaying information about purity of the sort-target particles included in the first containing space.
